# FASCICULE DE BREVET EUROPEEN

(11) **EP 3 227 094 B1**
(45) Date de publication et mention de la délivrance du brevet: **20.01.2021**
(21) Numéro de dépôt: 15817468.0
(22) Date de dépôt: 03.12.2015
(51) Int. Cl.: B29C 70/48, B29C 33/10

(54) **DISPOSITIF DE MOULAGE ET PROCEDE POUR LA FABRICATION DE PIECES EN MATERIAU COMPOSITE A PARTIR DE RESINE POLYMERE LIQUIDE PAR INJECTION HAUTE PRESSION**
FORMVORRICHTUNG UND VERFAHREN ZUR HERSTELLUNG VON KOMPOSITKOMPONENTEN AUS FLÜSSIGPOLYMERHARZ DURCH HOCHDRUCKEINSPRITZUNG
MOULDING DEVICE AND PROCESS FOR THE MANUFACTURE OF COMPOSITE COMPONENTS FROM LIQUID POLYMER RESIN BY HIGH-PRESSURE INJECTION

(30) Priorité: 03.12.2014 FR 1461867
(43) Date de publication de la demande: 11.10.2017
(73) Titulaire: Arkema France, 92700 Colombes (FR); Institut de Soudure, 93420 Villepinte (FR)
(72) Inventeur: CAUCHOIS, Jean-Pierre, 67510 Obersteinbach (FR); FRANCOIS, Gilles, 57590 Porcelette (FR); GERARD, Pierre, 64230 Denguin (FR); PERRIN, Henri, 57340 Brehain (FR); TAILLEMITE, Sébastien, 92370 Chaville (FR)
(74) Mandataire: Arkema Patent
(86) Numéro de dépôt international: PCT/FR2015/053310
(87) Numéro de publication internationale: WO 2016/087789

(56) Documents cités:
- EP-A1- 0 792 903
- EP-A1- 2 465 670
- US-A- 3 028 284
- huntsman: "RTM accelerates to facilitate mass production in the automotive composites market.", JEC COMPOSITES , 6 août 2012 (2012-08-06), XP002754145, Extrait de l'Internet: URL:http://www.jeccomposites.com/news/comp osites-news/rtm-accelerates-facilitate-mas s-production-automotive-composites-market [extrait le 2016-02-11]

## Description

### [Domaine d'invention]

L'invention concerne le domaine du moulage de pièce en matériau composite pour une production industrielle de telles pièces.

Plus particulièrement, l'invention concerne un dispositif de moulage pour la fabrication industrielle de pièces en matériau composite à partir de résines polymères liquides par injection haute pression. L'invention concerne également un procédé de fabrication de pièces en matériau composite mis en œuvre par le dispositif de moulage, les pièces obtenues par ledit procédé ainsi que les résines utilisées pour la mise en œuvre du procédé.

Le procédé selon l'invention permet l'injection de résines polymères en multi-composant. On désignera dans la suite par résine polymère une résine polymère avant polymérisation, et par résine polymérisée une résine polymère après polymérisation.

### [Art antérieur]

Certaines pièces ou certains ensembles de pièces tels que ceux précédemment cités sont parfois amenés à subir des contraintes mécaniques ou efforts mécaniques importants. De telles pièces sont dès lors très largement fabriquées à partir de matériaux composites.

Un matériau composite est un assemblage d'au moins deux composants non miscibles. Un effet de synergie est obtenu par un tel assemblage, de sorte que le matériau composite obtenu possède des propriétés notamment mécaniques et/ou thermiques que chacun des composants initiaux ne possède pas ou possède mais à un degré inférieur par rapport au matériau composite.

De plus, un matériau composite est constitué par au moins un matériau de renfort conférant audit matériau composite de bonnes propriétés mécaniques, notamment une bonne tenue aux efforts mécaniques subis par le matériau composite, et par un matériau de matrice, ou plus simplement matrice, formant une phase continue et assurant la cohésion dudit matériau composite. Parmi les différents types de composites utilisés dans l'industrie, les composites à matrices organiques sont les plus représentés. Dans le cas des composites à matrices organiques, le matériau de matrice est généralement un polymère. Ce polymère peut être soit un polymère thermodurcissable, soit un polymère thermoplastique.

La préparation du matériau composite s'effectue par un mélange du matériau de matrice et du matériau de renfort, ou par mouillage ou imprégnation du matériau de renfort par le matériau de matrice, puis par polymérisation du système obtenu. Le mélange de la matrice polymère, appelée résine dans la suite de la demande, et du renfort est réalisé dans un moule par injection de ladite résine dans ledit moule.

Les moules généralement utilisés dans l'industrie sont des moules avec un ou plusieurs évents permettant de garder l'équilibre de la pression à l'intérieur du moule. Cependant, un évent obturé peut entrainer des défauts sur la pièce finale obtenue après moulage. De plus, un évent laisse généralement une marque sur la pièce, il est donc nécessaire de positionner l'évent et/ou la pièce de sorte que cette marque soit la moins visible possible, ou qu'elle soit réalisée sur une partie de la pièce devant subir une transformation après le moulage.

Afin de pallier ces problèmes, des moules sans évents fonctionnant sous vide ont été conçus. Avant injection de la résine, le vide est fait dans le moule afin de permettre une imprégnation optimale du substrat par la résine, et d'obtenir des pièces en matériau composite possédant le moins de défauts ou d'imperfections possible
Le document DE 20 2012 104 148 décrit ainsi un outil de moulage formé de deux parties de formes complémentaires aptes à venir au contact l'une de l'autre et formant une cavité. La partie inférieure de l'outil de moulage comprend un conduit lié à une prise de vide et traversant la paroi de ladite partie inférieure. La partie supérieure est mobile notamment entre une position dite « ouverte » dans laquelle une extrémité du conduit débouche dans la cavité, le vide pouvant alors être fait dans ladite cavité, et une position dite « fermée » dans laquelle l'extrémité interne du conduit est bouchée par la partie supérieure. Des joints positionnés le long de la paroi de la partie supérieure de l'outil permettent d'assurer une bonne étanchéité entre la cavité et le conduit, et ainsi entre la cavité et le milieu extérieur. La partie inférieure de l'outil de moulage comprend une entrée d'injection par laquelle est injectée une résine lorsque le vide a été créé dans la cavité et que l'outil de moulage est en position fermée.

Cependant, un tel outil de moulage présente un coût important et son utilisation peut s'avérer complexe. Par ailleurs, le volume de la cavité diminue fortement entre la position ouverte de l'outil de moulage, et la position fermée. Cette importante diminution de volume est due au déplacement de la partie supérieure qui se rapproche de sa partie inférieure. Cette variation du volume s'accompagne d'une variation de pression au sein de la cavité, si bien que la pression lors de l'étape d'injection de la résine dans la cavité est supérieure à la pression lors de l'étape antérieure de création du vide dans ladite cavité. Cette différence de pression peut induire des défauts et/ou imperfections dans les pièces en matériau composite obtenues.

Par ailleurs, le volume permettant la réalisation du tirage du vide est faible, puisqu'il est déterminé par le volume du conduit compris dans la partie inférieure de l'outil de moulage. Or le diamètre du conduit ne peut pas avoir une dimension plus grande que l'espace situé entre les joints d'étanchéité prévus sur la partie supérieure de l'outil de moulage. Ainsi, le débit de tirage du vide est faible et le temps de moulage est élevé, rendant un tel outil de moulage inapproprié pour des applications industrielles où la cadence de production est soutenue. La demande US 3028284 divulgue un dispositif de moulage selon le préambule de la revendication 1.

L'invention a donc pour but de remédier aux inconvénients de l'art antérieur en proposant un dispositif de moulage pour la fabrication de pièce en matériau composite à base de résine polymère permettant d'obtenir des pièces sans défaut ou comportant un nombre de défauts et/ou d'imperfections faible. Le dispositif de moulage selon l'invention permet également une étape de tirage du vide rapide, avec un débit élevé. Un tel dispositif permet également de conserver un volume invariant de la cavité de moulage, ainsi qu'une variation de pression négligeable entre le tirage du vide et l'injection de la résine dans le dispositif de moulage.

### [Brève description de l'invention]

A cet effet, l'invention a pour objet un dispositif de moulage pour la fabrication de pièce en matériau composite structurée ou semi-structurée comprenant une résine polymère et un substrat : fibreux conformément à la revendication 1.

Selon une autre caractéristique, le moule comprend en outre un piston comportant une partie inférieure munie d'une surface inférieure, une partie supérieure, et un évidement, ledit piston étant apte à se déplacer le long de la colonne d'injection entre au moins une première position dite position ouverte dans laquelle sa surface inférieure définit avec la paroi de la tête d'injection et l'ouverture, une portion inférieure de colonne d'injection, et au moins une deuxième position dans laquelle le piston obture l'ouverture de la colonne d'injection.

Selon d'autres caractéristiques du dispositif de moulage,
- la tête d'injection comprend en outre, dans sa paroi, au moins un premier canal inférieur pour l'injection de la résine et au moins un premier canal supérieur pour l'évacuation de la résine de ladite tête d'injection, lesdits premiers canaux inférieur et supérieur étant positionnés à l'aplomb l'un de l'autre et formant, avec l'évidement du piston et la paroi de la tête d'injection, au moins un circuit de recirculation de la résine,
- la tête d'injection comprend en outre, dans sa paroi, au moins un deuxième canal inférieur pour l'injection de la résine et au moins un deuxième canal supérieur pour l'évacuation de la résine de ladite tête d'injection, lesdits deuxièmes canaux inférieur et supérieur étant positionnés à l'aplomb l'un de l'autre et formant, avec l'évidement du piston et la paroi de la tête d'injection, au moins un circuit de recirculation de la résine,
- la tête d'injection comprend, dans sa paroi, n canaux inférieurs pour l'injection de la résine et m canaux supérieurs pour l'évacuation de la résine de la colonne d'injection, n étant supérieur ou égal à 2, m étant supérieur ou égal à 2, n étant égal ou différent de m, de manière à former n circuits de recirculation de la résine si n est inférieur à m, ou m circuits de recirculation lorsque m est inférieur à n,
- la partie supérieure de la colonne d'injection est constituée d'un espace destiné à être mis sous pression, et apte à accueillir la partie supérieure du piston, ledit piston étant hydraulique, afin de permettre le déplacement dudit piston le long de la colonne d'injection.

L'invention a également pour objet un procédé de fabrication de pièce en matériau composite structurée ou semi-structurée comprenant une résine polymère et un substrat fibreux conformément à la revendication 9.

Selon une autre caractéristique, le procédé comprend en outre une étape de nettoyage de la résine non injectée dans la cavité, ladite étape de nettoyage pouvant être réalisée avant, pendant, ou après l'étape de compression de la résine.

Préalablement à l'étape d'injection de la résine, le procédé comprend une étape de fermeture de la chambre.

L'étape de fermeture de la chambre consiste en l'obturation de l'ouverture de l'espace de retrait par la surface inférieure de la collerette, par déplacement de ladite collerette en position fermée.

Le procédé permet l'injection en multi-composant de la résine polymère et plus particulièrement une injection en bi-composant.

### [Brève description des dessins]

D'autres avantages et caractéristiques de l'invention apparaîtront à la lecture de la description suivante donnée à titre d'exemple illustratif et non limitatif, en référence aux schémas du dispositif de moulage représentés par les Figures annexées:
- La Figure 1.1, une vue en coupe du dispositif de moulage lors de l'étape de tirage du vide.
- La Figure 1.2, une vue en coupe du dispositif de moulage lors de l'étape de fermeture de la collerette.
- La Figure 1.3, une vue en coupe du dispositif de moulage lors de l'étape d'injection de la résine.
- La Figure 1.4, une vue en coupe du dispositif de moulage lors des étapes de recirculation et de compression de la résine.
- La Figure 2, un schéma d'un système de renvoi d'angle.
- La Figure 3, un schéma de moyens de stockage de la résine.
- La Figure 4, un schéma de moyens de rétrécissement périphérique.

### [Description détaillée de l'invention]

### DESCRIPTION GENERALE DU DISPOSITIF DE MOULAGE.

Le terme « monomère » tel qu'utilisé se rapporte à une molécule qui peut subir une polymérisation.

Le terme « polymérisation » tel qu'utilisé se rapporte au procédé de transformation d'un monomère ou d'un mélange de monomères en un polymère. Un oligomère est un polymère comprenant un faible nombre de monomères.

On entend par « injection multi-composant » l'injection d'une résine comprenant au moins deux composants, et dont lesdits composants ne sont mis en contact qu'à compter de l'étape d'injection de ladite résine dans un dispositif de moulage. Le présent document présente en particulier une injection bi-composant, c'est-à-dire l'injection d'une résine comprenant deux composants A et B, et dont lesdits composants ne sont mis en contact qu'à compter de l'étape d'injection de ladite résine dans un dispositif de moulage.

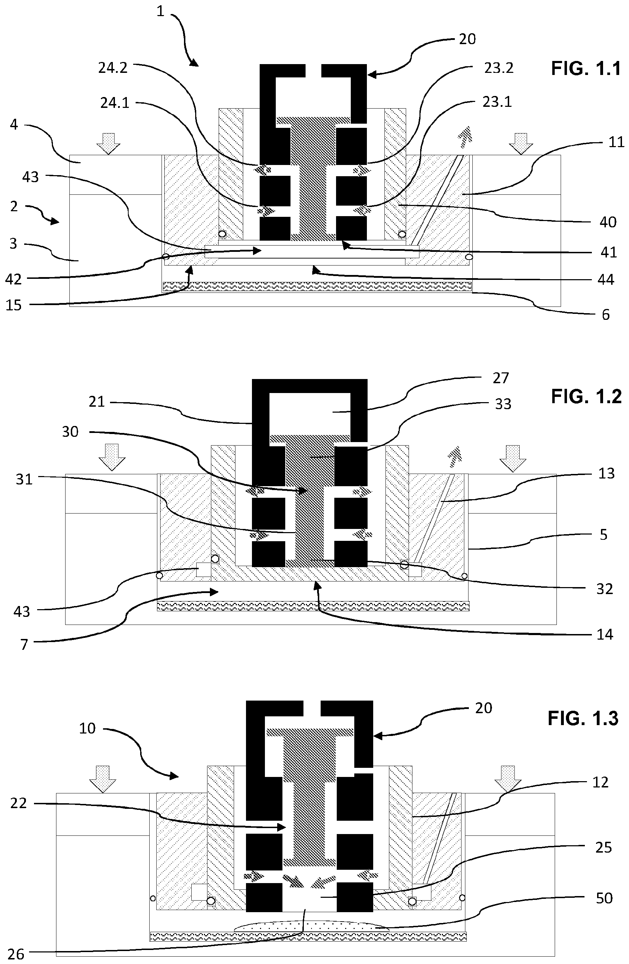

Le dispositif de moulage 1 représenté par le schéma de la figure 1.1 comprend un moule 2 comportant une partie inférieure 3 et une partie supérieure 4 apte à venir au contact de ladite partie inférieure, de manière à venir en appui sur la partie fixe, afin de fermer le moule. Le moule 2 comporte un fond 6 prévu dans sa partie inférieure 3, destiné à recevoir le renfort fibreux. Le fond est limité en périphérie par la surface latérale 5 du moule.

Le dispositif de moulage 1 comprend également une partie mobile 10 apte à se déplacer le long de la surface latérale 5 du moule. Ladite partie mobile comporte une surface de compression 14 formant, avec la paroi latérale 5 du moule et le fond 6 du moule, une cavité 7. La partie mobile comporte également un poinçon 11 apte à se déplacer le long de la surface latérale 5 du moule 1, ainsi qu'une tête d'injection 20 qui est, comprise à l'intérieur d'une collerette 40, logée dans le poinçon 11.

La partie mobile 10 comprend également un canal de tirage du vide 13, destiné à être lié à un dispositif de tirage du vide tel qu'une pompe à vide par exemple. Le canal débouche sur une chambre 42. Cette chambre est située au-dessus de la cavité 7 et communique avec ladite cavité 7 par une ouverture sur cette cavité.

Avantageusement, le dispositif de moulage 1 comprend en outre un système de mise en mouvement 60 de la partie mobile 10, en particulier du poinçon 11, permettant d'appliquer une pression constante sur ladite partie mobile afin de comprimer l'ensemble résine-substrat au fur et à mesure que la résine polymérise, pendant toute la durée de la réaction de polymérisation de ladite résine.

En effet, lors de la polymérisation de la résine 50, ultérieurement à l'imprégnation du substrat fibreux 51 par ladite résine, on observe un phénomène de retrait volumique de ladite résine. Le volume occupé par l'ensemble résine-substrat diminue au fur et à mesure du déroulement de la réaction de polymérisation de la résine, de sorte que le volume occupé par l'ensemble résine polymérisée-substrat obtenu en fin de réaction de polymérisation est inférieur au volume occupé par l'ensemble résine substrat initial. Le système décrit permet d'obtenir une imprégnation optimale du substrat fibreux par la résine, car il permet de conserver la partie mobile 10, et en particulier la surface de compression 14 de ladite partie mobile, au contact de l'ensemble résine-substrat, et de comprimer ledit ensemble résine-substrat pendant toute la durée de la réaction de polymérisation.

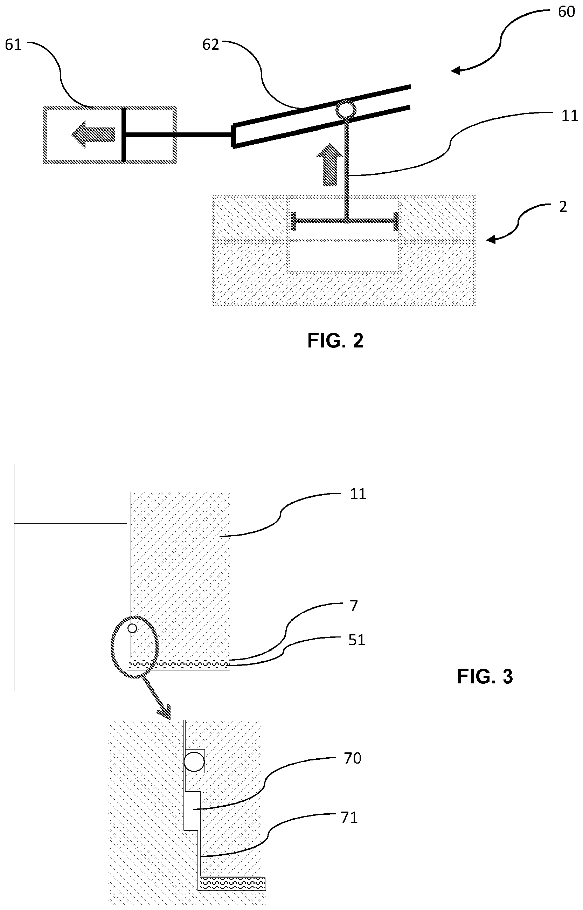

Avantageusement, le système comprend un système de renvoi d'angle 60 en translation, tel que représenté Figure 2. Le système comporte un vérin 61 appliquant un effort sur un renvoi d'angle en translation 62, ledit renvoi d'angle étant positionné de manière à être décalé d'un angle α par rapport à l'axe longitudinal du vérin. Le renvoi d'angle est lié au poinçon 11 et transmet l'effort au poinçon, permettant audit poinçon de décrire un mouvement de translation et de coulisser le long de la surface latérale 5 du moule.

Pour la mise en œuvre du procédé de fabrication de pièce en matériau composite, il est nécessaire de pouvoir contrôler précisément le mouvement et le positionnement de la partie mobile 10, et en particulier du poinçon 11, durant toutes les étapes du procédé. Dans ce but, le vérin 61 est de préférence un vérin double action.

Le système 60 décrit permet avantageusement de réaliser le déplacement du poinçon 11 tout en compensant le retrait de la résine pendant la phase de polymérisation de ladite résine en appliquant une pression constante sur le poinçon. La pression exercée est déterminée notamment en fonction du type de résine et du volume de résine injectée. Ce système 60 permet d'obtenir une excellente homogénéité d'imprégnation du substrat fibreux par la résine, aboutissant à des pièces en matériau composite possédant de bonnes propriétés mécaniques ainsi qu'un bon aspect de surface, sans aspérités.

Le dispositif de moulage 1 comprend avantageusement des moyens de stockage permettant d'accueillir un surplus de résine injectée, lorsque le volume de résine injectée est supérieur au volume nécessaire à l'imprégnation optimale du substrat fibreux dans le moule. Les moyens de stockage, tels que représentés Figure 3, sont réalisés avantageusement par une chambre de réserve 70 apte à accueillir le surplus de résine injectée 50, ladite chambre de réserve étant reliée à la cavité 7 par un conduit 71. De cette manière, lorsque le volume de résine injectée est supérieur au volume nécessaire à l'imprégnation optimale du substrat fibreux, le surplus de résine emprunte le conduit jusqu'à venir se loger dans la chambre de réserve 70.

La présence de cette chambre de réserve 70 permet d'obtenir une fenêtre d'injection de résine plus large, puisqu'en cas de dépassement du volume d'imprégnation optimal, le surplus vient se loger dans la chambre de réserve. Ainsi, ces moyens de stockage permettent de garantir une imprégnation optimale du substrat fibreux et ainsi d'obtenir des pièces en matériau composite possédant de bonnes propriétés mécaniques.

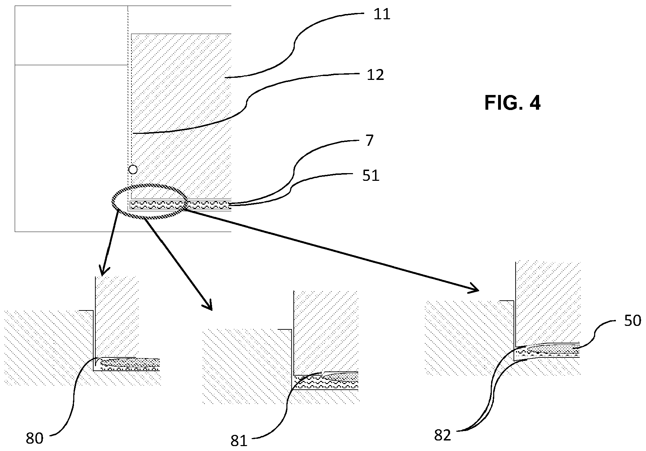

Le dispositif de moulage comprend avantageusement des moyens de rétrécissement périphérique de la section de la pièce consistant en une variation de la géométrie de la surface inférieure du poinçon et/ou du fond du moule. Les moyens de rétrécissement tels que représentés Figure 4 sont situés à proximité de la surface latérale 5 du moule et sont illustrés par trois variantes de réalisation portant les références 80, 81, et 82 sur la figure 6.

Dans la première variante, la surface inférieure 15 du poinçon est incurvée de manière à former un bec 80. Dans la deuxième variante, la surface inférieure du poinçon comporte une encoche 81. Dans la troisième variante de réalisation, la surface inférieure du poinçon et le fond 6 du moule comportent une rupture de pente, de manière à former un dévers.

De tels moyens (80, 81, 82) de rétrécissement périphérique de la section de la pièce permettent d'obtenir une bonne homogénéité d'imprégnation du substrat fibreux 51 par la résine 50 en évitant notamment la formation de zones sèches correspondant à des zones du substrat au niveau desquelles l'imprégnation dudit substrat par la résine est faible voire inexistante. Lesdits moyens (80, 81, 82) de rétrécissement périphérique de la section de la pièce permettent ainsi d'obtenir des pièces composites possédant de bonnes propriétés mécaniques.

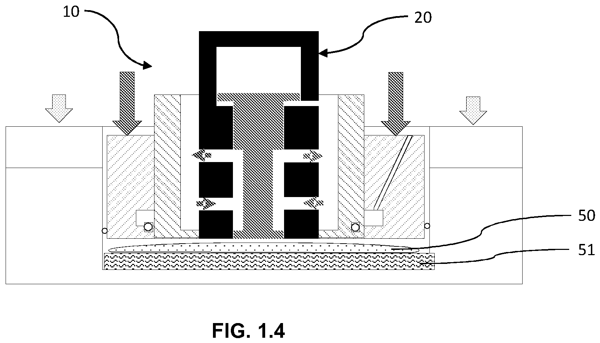

### DETAIL DE FONCTIONNEMENT ET DE FABRICATION DE PIECE EN MATERIAU COMPOSITE ILLUSTRE PAR LES FIGURES 1.1, 1.2, 1.3, 1.4.

Le dispositif de moulage illustré par les schémas des figures 1.1, 1.2, 1.3, 1.4 permet l'injection de résine 50 en bi-composant. La partie mobile 10 est apte à se déplacer le long de la surface latérale 5 du moule, et le poinçon 11, disposé dans cette partie mobile, est apte à se déplacer le long de ladite surface latérale du moule. La partie mobile 10 du dispositif de moulage 1 comporte la collerette 40 dans laquelle est située une tête d'injection 20, de sorte que ladite collerette entoure ladite tête d'injection. La collerette 40 est apte à se déplacer le long de la surface latérale 12 du poinçon 11, et relativement à la surface latérale 5 du moule. En particulier la collerette est apte à se déplacer entre au moins une première position dite position ouverte et au moins une deuxième position dite position fermée.

La tête d'injection 20 est dite « haute pression ». Elle peut être utilisée avec une pression élevée d'injection de la résine généralement comprise entre 50 bars et 100 bars. Elle comporte, dans sa paroi 21, un premier canal inférieur 23.1 et un premier canal supérieur 23.2 situés à l'aplomb l'un de l'autre, ainsi qu'un deuxième canal inférieur 24.1 et un deuxième canal supérieur 24.2 situés à l'aplomb l'un de l'autre. Les premiers et deuxièmes canaux inférieurs sont opposés l'un par rapport à l'autre et se font face. De même, les premiers et deuxièmes canaux supérieurs sont opposés l'un par rapport à l'autre et se font face.

La tête d'injection 20 comporte en outre un piston hydraulique 30 comportant un évidement 31 sur une partie de sa longueur, ledit piston hydraulique étant apte à se déplacer la long de la colonne 22 de ladite tête d'injection entre au moins une première position, dite position ouverte, et une deuxième position, dite position fermée.

En position ouverte, l'extrémité inférieure 32 du piston, la paroi 21 de la tête d'injection, et l'ouverture 26 de la colonne délimitent une portion de colonne 25 destinée notamment à accueillir une résine polymère avant d'être injectée dans la cavité 7.

En position fermée, l'ouverture de la colonne 26 est obturée par l'extrémité inférieure 32 du piston. De plus, l'évidement 31 prévu sur une partie du piston hydraulique et les canaux supérieur et inférieur forment des circuits de circulation de résine polymère. Un premier circuit est formé par l'évidement 31 du piston, le premier canal inférieur 23.1, et le premier canal supérieur 23.2. Un deuxième circuit est formé par l'évidement 31 du piston, le deuxième canal inférieur 24.1, et le deuxième canal supérieur 24.2.

Comme décrit précédemment, le piston 30 est un piston hydraulique permettant l'injection de la résine polymère sous haute pression. Afin de pouvoir appliquer une telle pression sur le piston, la tête d'injection comporte un espace 27 apte à accueillir l'extrémité supérieure 33 du piston.

Le tirage du vide est effectué via un canal 13 situé dans le poinçon de la partie mobile, dont une extrémité débouche dans la chambre constituée de l'espace de retrait 42, en particulier dans la rainure périphérique 43 de l'espace de retrait communiquant avec la cavité 7 par une ouverture 44, et l'autre extrémité débouche sur l'extérieur du poinçon et est raccordée à un système de tirage du vide tel qu'une pompe à vide par exemple.

Lors de l'étape de tirage du vide, le piston est en position fermée et obture l'ouverture 26 de la colonne d'injection. Le poinçon 11 est en position haute, et la collerette 40 est en position ouverte de manière à former l'espace de retrait 42. Les composants A et B sont en recirculation dans la tête d'injection, respectivement dans le premier circuit et dans le deuxième circuit. Le débit de recirculation des composants A et B est ajusté de manière à permettre un mélange optimal desdits composants sous haute pression lors de l'étape ultérieure d'injection de la résine. En particulier, le débit de recirculation des composants A et B peut être égal ou différent du débit d'injection de la résine lors de l'étape ultérieure d'injection de la résine.

Lorsque le vide est réalisé dans la cavité et dans l'espace de retrait, la collerette 40 se déplace le long de la surface latérale 12 du poinçon jusqu'à se retrouver en position fermée, comblant ainsi l'espace de retrait 42. La collerette obstrue la rainure 43 afin d'empêcher l'entrée de l'air via le canal 13 dans la cavité 7 lors des étapes ultérieures du procédé. En position fermée, la surface inférieure 41 de la collerette est située au même niveau que la surface inférieure 15 du poinçon, de sorte que lesdites surfaces inférieures de la collerette et du poinçon forment une surface de compression 14. La collerette est ensuite fixée au poinçon, devenant solidaire dudit poinçon, afin de garantir l'étanchéité de la cavité.

La résine 50 est ensuite injectée dans la cavité 7 du moule afin d'imprégner le substrat fibreux 51 placé préalablement dans ladite cavité. Lors de l'étape d'injection de la résine, le piston 30 est en position ouverte, le premier canal inférieur 23.1 et le deuxième canal inférieur 24.1 débouchant ainsi dans la portion de colonne 25.

Les composants A et B sont injectés respectivement via le premier canal inférieur et le deuxième canal inférieur dans la portion de colonne où ils entrent en contact l'un avec l'autre sous haute pression. La pression d'injection et le débit d'injection des composants A et B peuvent être choisis égaux ou différents de la pression de recirculation et du débit de recirculation desdits composants A et B.

La mise en contact des composants A et B dans la portion de colonne sous haute pression et avec un débit élevé permet d'obtenir un mélange homogène desdits composants, et ainsi une résine polymère homogène, afin de réaliser une imprégnation optimale du substrat fibreux.

Lorsque la quantité de résine souhaitée a été injectée dans la cavité du moule, le piston 30 est déplacé en position fermée afin d'obturer l'ouverture 26 de la portion de colonne d'injection. Les composants A et B sont alors en recirculation dans la tête d'injection, respectivement dans le premier circuit et dans le deuxième circuit, comme lors de l'étape de tirage du vide.

Après recirculation de la résine, la partie mobile 10 du dispositif de moulage se déplace le long de la surface latérale 5 du moule jusqu'à atteindre une position basse, variable selon le type et le volume de résine injectée, de manière à ce que la surface de compression 14 vienne au contact de ladite résine injectée. La partie mobile compresse la résine, permettant un étalement maximal de la résine sur toute la surface du substrat fibreux, ainsi qu'une imprégnation optimale du substrat fibreux par ladite résine. L'étape de recirculation de la résine peut être réalisée avant, pendant, ou après l'étape de compression. De préférence, les étapes de recirculation et de compression ont lieu simultanément.

L'injection peut être réalisée en bi-composant ou de manière plus générale en multi-composant, le nombre de canaux inférieurs et supérieurs ainsi que le nombre de circuits de recirculation de résine étant adaptés en conséquence. En particulier, les composants A et B peuvent être identiques ou différents.

Les composants A et B peuvent également être différents et constitués chacun d'une résine polymère différente, aboutissant à une injection notamment en bi-composant de deux résines polymères différentes.

### PROCEDE DE FABRICATION DE PIECE STRUCTUREE OU SEMI-STRUCTUREE EN MATERIAU COMPOSITE.

Le dispositif de moulage décrit permet la fabrication de pièce structurée ou semi-structurée en matériau composite. Les pièces sont obtenues comme décrit avec les différents modes de réalisation par moulage à partir de résine polymère, notamment d'une ou plusieurs résines polymères thermoplastiques ou thermodurcissable, et d'un substrat fibreux. Ces résines polymères peuvent aussi être appelées pré-polymères car elles sont les précurseurs de la matrice polymère du matériau composite obtenue après leur polymérisation dans le dispositif de moulage utilisé dans le procédé de moulage.

Le procédé comprend plus particulièrement les étapes de :
- positionnement d'un substrat fibreux 51 sur le fond 6 de la cavité 7 du dispositif de moulage. Le moule 2 du dispositif de moulage est en position ouverte pour permettre le positionnement du substrat fibreux dans la cavité dudit moule. Le dispositif de moulage est ensuite fermé par mise en contact des parties supérieure 4 et inférieure 3 dudit dispositif de moulage puis par pression de ladite partie supérieure contre ladite partie inférieure au moyen d'un système de fermeture tel qu'une presse par exemple, ou tout autre système de fermeture de dispositif de moulage couramment utilisé dans l'industrie.
- mise sous vide de la cavité 7, ou tirage du vide dans la cavité, via le canal prévu à cet effet. Le canal de tirage du vide 13 est situé dans la partie mobile du dispositif de moulage et débouche sur la chambre 42 qui communique avec la cavité 7. Le canal de tirage du vide est destiné à être raccordé à un système de tirage du vide tel qu'une pompe à vide par exemple, pour la réalisation de l'étape de tirage du vide dans la cavité. Ainsi, à l'issue de l'étape de tirage sous vide, le vide est fait dans la chambre et dans la cavité.
- imprégnation du substrat fibreux, préalablement positionné dans la cavité 7 du dispositif de moulage, par la résine polymère.

L'étape d'imprégnation comprend une étape d'injection de la résine dans la cavité puis une étape de compression de ladite résine et du substrat fibreux.

L'injection de la résine est effectuée via le canal d'injection situé dans la partie mobile 10. Une quantité prédéterminée de résine 51 est injectée via le canal, transite dans la tête d'injection, puis vient se loger dans la cavité, entrant au contact du substrat fibreux 51. On obtient, après polymérisation de la résine, une résine polymérisée constituant la matrice polymère du matériau composite.

Le procédé de moulage mis en œuvre par le dispositif de moulage selon l'invention permet d'obtenir un volume de la cavité 7 invariant entre l'étape de tirage du vide, et l'étape d'injection de la résine 50. Le dispositif de moulage proposé permet également d'obtenir une pression invariante ou quasi-invariante entre l'étape de tirage du vide, et l'étape d'injection de la résine. Par pression quasi-invariante, on entend une variation négligeable de pression dans la cavité, ainsi que des conséquences négligeables de ladite variation de pression sur la qualité des pièces en matériau composite obtenues.

Le dispositif de moulage pour la fabrication de pièces en matériau composite selon l'invention permet également d'obtenir une surface de tirage de vide très importante, et un ainsi de générer un vide supérieur à 100 mbar, de préférence supérieur à 75 mbar et de manière encore plus préféré supérieur à 50 mbar, en un temps inférieur à 10 secondes, de préférence inférieur à 8 secondes et de manière encore plus préféré inférieur 5 à secondes. On entend par un vide très important une pression dans la moule et préférablement dans la cavité inférieur à 100mbar, de préférence inférieur à 75mbar et de manière encore plus préféré inférieur à 50mbar.

Un tel dispositif de moulage permet par conséquent d'obtenir des pièces en matériau composite avec un nombre de défaut et/ou d'imperfection réduit, et une imprégnation optimale du substrat fibreux par la résine polymère.

### SUBSTRAT FIBREUX

Concernant le substrat fibreux, ledit substrat a de préférence une dimension correspondant à la dimension de la cavité de moulage, de sorte que ledit substrat fibreux recouvre entièrement ou presque entièrement le fond de ladite cavité de moulage.

Le substrat fibreux comprend de préférence des fibres longues, et dont le rapport L/D (rapport de la longueur par le diamètre) est supérieur à 1000, de préférence supérieur à 2000, avantageusement supérieur à 3000, plus avantageusement supérieur à 5000, encore plus avantageusement supérieur à 6000, encore plus avantageusement supérieur à 7500, et de la manière la plus avantageuse supérieur à 10000.

### LES FIBRES.

Les fibres du substrat peuvent être continues et présentes sous forme d'assemblage qui peut être une préforme. Elles peuvent se présenter sous forme de renfort unidirectionnel (UD) ou multidirectionnel (2D, 3D). En particulier, elles peuvent être sous forme de tissus, d'étoffes, de nappes, de bandes ou de tresses et peuvent également être coupées par exemple sous forme de non tissés (mats) ou sous forme de feutres.

Les fibres du substrat ont un diamètre compris entre 0.005 µm et 100 µm, de préférence entre 1 µm et 50 µm, plus préférablement entre 3 µm et 30 µm, et avantageusement entre 5 µm et 25 µm.

Les fibres du substrat peuvent être choisies parmi :
- les fibres minérales, celles-ci ayant de préférence des températures de fusion Tf élevées et supérieures aux températures de mise en œuvre,
- les fibres polymériques ou de polymère, de préférence ayant une température de fusion Tf' ou à défaut de Tf', une température de transition vitreuse Tg', bien supérieure aux températures de mise en œuvre,
- ou les mélanges des fibres citées plus haut.

Plus particulièrement, les fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme A1203, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   - les fibres de polymères thermoplastiques et plus particulièrement choisies parmi: le polyéthylène téréphtalate (PET), le polybutylène téréphtalate (PBT),
   - les fibres de polyamides,
   - les fibres d'aramides (comme le Kevlar(R)) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
   - les fibres de copolymères blocs de polyamide tels que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues choisies parmi les : fibres de carbone y compris métallisées, fibres de verre y compris métallisées de type E, R, S2, fibres d'aramides (comme le Kevlar(R)) ou de polyamides aromatiques, les fibres de polyaryléthers cétones (PAEK) telles que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar(R)) ou leurs mélanges.

Lesdites fibres peuvent représenter des taux de 40% à 70% en volume, de préférence de 45% à 70% en volume et de manière encore plus préféré de 50% à 65% en volume dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 150 à 900 g/m² et de manière encore plus préféré 200 à 700g/m².

### LA RESINE POLYMERE.

On injecte dans le dispositif de moulage 1 la résine polymère illustrée par la référence 50 sur les figures.

Par résine polymère, on entend ici, une composition chimique liquide visqueuse comprenant des composants comportant des groupements réactifs. Une telle résine, lorsqu'elle est injectée dans le dispositif de moulage 1, permet par imprégnation du substrat fibreux 51 et polymérisation ultérieure de ladite résine, formant alors une résine polymérisée, d'obtenir une pièce en matériau composite pour des applications variées, par exemple le domaine ferroviaire, aéronautique, ou encore la construction et le bâtiment.

Les résines utilisées sont les résines réactives, permettant une polymérisation in-situ. Ces résines sont liquides, avec une viscosité inférieure ou égale à 10.000 mPa.s à une certaine température inférieure ou égale à 300 °C.

Les résines sont injectées en multi-composant, en particulier en bi-composant dans le dispositif de moulage précédemment décrit, c'est-à-dire que les composants A et B de telles résines ne sont mis en contact qu'à compter de l'étape d'injection de la résine dans ledit dispositif de moulage, évitant ainsi une étape de conservation d'un mélange des composants A et B à basse température.

La résine comprend un composant A constitué d'un sirop comprenant au moins un polymère ou un oligomère pouvant être ou non réactif, et au moins un monomère ou un allongeur de chaîne apte à réagir avec ledit polymère ou oligomère si ledit polymère ou oligomère est réactif. La résine comprend également un composant B comprenant au moins un amorceur ou catalyseur destiné à réagir avec le monomère ou l'allongeur de chaine pour démarrer la polymérisation.

En particulier, la polymérisation de la résine peut être une polymérisation par voie radicalaire, ou une polyaddition ou polycondensation.

Dans le cas d'une polymérisation par voie radicalaire, la résine comprend un composant A constitué d'un sirop comprenant au moins un polymère ou oligomère pouvant être ou non réactif, et au moins un monomère. La résine comprend également un composant B comprenant au moins un amorceur destiné à réagir avec le monomère et/ou le polymère ou oligomère, si ledit polymère ou oligomère est réactif, pour démarrer la polymérisation.

Dans le cas d'une polyaddition ou polycondensation, la résine comprend un composant A constitué d'un sirop comprenant au moins un polymère ou oligomère réactif. La résine comprend également un composant B comprenant au moins un allongeur de chaine destiné à réagir avec le polymère ou oligomère réactif, pour démarrer la polymérisation.

Les résines utilisées pour une injection en multi-composant, en particulier en bi-composant comprennent :
- Les résines thermodurcissables polyester, composées de polymères polyesters insaturées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques, en combinaison ou non avec le styrène.
- Les résines thermodurcissables vinyl-ester, composées de polymères époxydes méthacrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques en combinaison ou non avec le styrène.
- Les résines thermodurcissables acryliques, composées de polymères uréthane (méth)acrylées ou polyester (méth)acrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que le styrène ou des monomères (méth)acryliques en combinaison ou non avec le méthacrylate de méthyle.
- Les mélanges des trois types de résines décrits ci-dessus.
- Les résines thermodurcissables polyuréthanes, à base de polymères ou oligomères ayant des fonctions isocyanates, en présence d'additifs et/ou de diluants. La polymérisation est effectuée par poly-addition ou poly-condensation d'un poly-ol ou d'une poly-amine, éventuellement en présence d'un accélérateur.
- Les résines thermodurcissables époxydes, à base de polymères ou oligomères ayant des fonctions époxydes, en présence d'additifs et/ou de diluants. La polymérisation est effectuée par poly-addition ou poly-condensation d'une poly-amine ou d'un anhydride, éventuellement en présence d'un accélérateur.
- Les résines thermoplastiques acryliques composées d'au moins un polymère et d'au moins un monomère, et un amorceur destiné à démarrer la polymérisation dudit au moins un monomère. Le ou les monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que des monomères (méth)acryliques, en combinaison ou non avec le méthacrylate de méthyle.
- Les résines thermoplastiques polyamides (PA et PAHT), telles que celles décrites dans les documents EP 1191050 et EP 2586585 incorporés par référence. Notamment et à titre d'exemple, on peut citer les résines thermoplastiques polyamides comprenant au moins un monomère lactame, tels que le β,β-diméthylpropriolactame, le α,α-diméthylpropriolactame, l'amylolactame, le caprolactame, le capryllactame et le lauryllactame.

### LES PIECES EN MATERIAU COMPOSITE.

Le dispositif de moulage et le procédé décrits précédemment permettent de réaliser une pièce en matériau composite, ou une pièce composite, structurée ou semi-structurée, en particulier une pièce ne comportant aucune carotte résiduelle de moulage et pouvant être utilisée après démoulage sans aucun traitement de finition.

Plus particulièrement, ladite pièce est " net-shape " selon ce terme en anglais et courant dans le métier du moulage, ce qui signifie ne nécessitant aucun usinage ou finition particulière avant utilisation finale. Ceci est lié aux conditions spécifiques de fabrication et en particulier de moulage dans un moule fonctionnant sous vide et de ce fait sans aucun besoin d'évent qui d'habitude (quand il est présent) nécessite, au démoulage, l'élimination de la carotte formée liée à cet évent par un usinage et une finition supplémentaire. Ceci est une différence importante de structure finale et un avantage supplémentaire significatif par rapport à l'état de la technique dans ce domaine. En effet, le dispositif est adapté à la fabrication industrielle de pièces en matériaux composites structurées ou semi-structurées ; on obtient notamment un gain en productivité, pas de déchet et des pièces mécaniques sans défaut avec, en conséquence des caractéristiques mécaniques meilleures.

La pièce structurée ou semi-structurée ainsi obtenue peut être utilisée pour diverses applications finales, en particulier dans les domaines de l'automobile, du transport routier comme pièces pour camions, ferroviaire, maritime et aéronautique, photovoltaïque, solaire (thermique) en particulier composants de centrales solaires, de l'éolien, spatial, bâtiment et génie civil, mobilier et équipements urbains, signalisation, des sports et loisirs.

## Revendications

1. Dispositif de moulage (1) pour la fabrication de pièce en matériau composite structurée ou semi-structurée comprenant une résine polymère (50) et un substrat fibreux (51) comprenant:
- un moule (2) comprenant une partie inférieure (3) avec un fond et une paroi latérale et une partie supérieure (4) apte à venir au contact de ladite partie inférieure afin de fermer le moule,
- une partie mobile (10) apte à se déplacer le long de la surface latérale du moule, comprenant une surface de compression (14) formant avec le fond et la surface (5) latérale dudit moule (2) une cavité (7), la partie mobile (10) comprenant un canal de tirage (13) du vide débouchant dans une chambre constituée d'un espace de retrait (42) située au-dessus de la cavité et communiquant avec ladite cavité (7), et un poinçon (11) apte à se déplacer le long de la surface latérale du moule, **caractérisé en ce que** la partie mobile comprend en outre une tête d'injection (20), ladite tête d'injection étant munie d'une paroi (21) définissant une colonne d'injection (22) communiquant avec la cavité par une ouverture (26) ; et
**en ce que** la partie mobile (10) comprend en outre une collerette (40) apte à se déplacer le long de la surface latérale du poinçon (11), entre au moins une première position dite ouverte dans laquelle la surface inférieure de la collerette (40) définit avec la surface latérale du poinçon l'espace de retrait (42) communiquant avec la cavité (7) par une ouverture (44), et au moins une deuxième position dite fermée dans laquelle la collerette obture ladite ouverture (44), l'espace de retrait comprenant une rainure périphérique (43) située dans le poinçon; et
**en ce que** le canal de tirage du vide (13) est constitué d'un canal situé dans le poinçon et débouchant sur la chambre (42) constituée de l'espace de retrait, ou sur la rainure (43) périphérique dudit espace de retrait ; et
**en ce que** la tête d'injection (20) est comprise à l'intérieur de la collerette (40).

2. Dispositif de moulage selon la revendication 1, **caractérisé en ce qu'**il comprend en outre un piston (30) comportant une partie inférieure (32) munie d'une surface inférieure, une partie supérieure (33), et un évidement (31), ledit piston étant apte à se déplacer le long de la colonne d'injection (22) entre au moins une première position dite position ouverte dans laquelle sa surface inférieure définit avec la paroi de la tête d'injection et l'ouverture, une portion inférieure de colonne d'injection, et au moins une deuxième position dans laquelle le piston obture l'ouverture de la colonne d'injection.

3. Dispositif de moulage selon les revendications 1 à 2, **caractérisé en ce que** le dispositif de moulage (1) comprend en outre un système de mise en mouvement (60) de la partie mobile (10) permettant d'appliquer une pression constante sur ladite partie mobile.

4. Dispositif de moulage selon la revendications 3 , **caractérisé en ce que** le système (60) comprend un système de renvoi d'angle en translation, comportant un vérin (61) appliquant un effort sur un renvoi d'angle en translation (62), ledit renvoi d'angle étant positionné de manière à être décalé d'un angle α par rapport à l'axe longitudinal du vérin (61).

5. Dispositif de moulage selon les revendications 1 à 2, **caractérisé en ce que** la tête d'injection (20) comprend en outre, dans sa paroi, au moins un premier canal (23.1) inférieur pour l'injection de la résine et au moins un premier canal (23.2) supérieur pour l'évacuation de la résine de ladite tête d'injection, lesdits premiers canaux inférieur et supérieur étant positionnés à l'aplomb l'un de l'autre et formant, avec l'évidement du piston et la paroi de la tête d'injection, au moins un circuit de recirculation de la résine.

6. Dispositif de moulage selon la revendication, **caractérisé en**
**ce que** la tête d'injection (20) comprend en outre, dans sa paroi, au moins un deuxième canal (24.1) inférieur pour l'injection de la résine et au moins un deuxième canal (24.2) supérieur pour l'évacuation de la résine de ladite tête d'injection, lesdits deuxièmes canaux inférieur et supérieur étant positionnés à l'aplomb l'un de l'autre et formant, avec l'évidement du piston et la paroi de la tête d'injection, au moins un circuit de recirculation de la résine.

7. Dispositif de moulage selon les revendications 1 à 2, **caractérisé en ce que** la tête d'injection (20) comprend, dans sa paroi, n canaux inférieurs pour l'injection de la résine et m canaux supérieurs pour l'évacuation de la résine de la colonne d'injection, n étant supérieur ou égal à 2, m étant supérieur ou égal à 2, n étant égal ou différent de m, de manière à former n circuits de recirculation de la résine si n est inférieur à m, ou m circuits de recirculation lorsque m est inférieur à n.

8. Dispositif de moulage selon la revendication 2, **caractérisé en ce que** la partie supérieure de la colonne d'injection est constituée d'un espace (27) destiné à être mis sous pression, et apte à accueillir la partie supérieure (33) du piston (30), ledit piston étant hydraulique, afin de permettre le déplacement dudit piston le long de la colonne d'injection (22).

9. Procédé de fabrication de pièce en matériau composite structurée ou semi-structurée comprenant une résine polymère et un substrat fibreux, **caractérisé en ce qu'**il est mis en œuvre à l'aide d'un dispositif d'injection selon l'une quelconque des revendications 1 à 8, et comprenant les étapes suivantes :
- a) positionnement du substrat fibreux dans la cavité,
- b) tirage du vide dans la cavité via le canal de tirage du vide situé dans la partie mobile du dispositif de moulage,
- c) imprégnation du substrat fibreux par injection d'une quantité prédéterminée de résine polymère dans la cavité via le canal d'injection de la résine, puis compression de ladite résine par la partie mobile du dispositif de moulage.

10. Procédé de fabrication selon la revendication 9, **caractérisé en ce qu'**il comprend en outre une étape de recirculation de la résine non injectée dans la cavité, ladite étape de recirculation pouvant être réalisée avant, pendant, ou après l'étape de compression de la résine.

11. Procédé de fabrication selon la revendication 9, **caractérisé en ce qu'**il comprend en outre, préalablement à l'étape d'injection de la résine, une étape de fermeture de la chambre.

12. Procédé de fabrication selon la revendication 11, **caractérisé en ce que** l'étape de fermeture de la chambre consiste en l'obturation de l'ouverture de l'espace de retrait par la surface inférieure de la collerette, par déplacement de ladite collerette en position fermée.

13. Procédé de fabrication selon l'une quelconque des revendications 10 à 12, **caractérisé en ce qu'**il permet l'injection en multi-composant de la résine polymère et en particulier l'injection en bi-composant.

## Patentansprüche

1. Formgebungsvorrichtung (1) zur Herstellung von strukturierten oder halbstrukturierten Teilen aus Verbundwerkstoff, welcher ein Polymerharz (50) und ein Fasersubstrat (51) umfasst, wobei sie Folgendes umfasst:
- eine Form (2), die
einen unteren Abschnitt (3) mit einem Boden und einer Seitenwand und
einen oberen Abschnitt (4) umfasst, der dazu befähigt ist, mit dem unteren Abschnitt in Berührung zu kommen, um die Form zu schließen,
- einen beweglichen Abschnitt (10), der dazu befähigt ist, sich entlang der Seitenfläche der Form zu bewegen, wobei er eine Druckfläche (14) umfasst, welche mit dem Boden und der Seitenfläche (5) der Form (2) einen Hohlraum (7) bildet,
wobei der bewegliche Abschnitt (10) einen Vakuumabsaugkanal (13), der in eine Kammer einmündet, welche aus einem Rückzugsraum (42) besteht, der sich oberhalb des Hohlraums befindet und mit dem Hohlraum (7) in Verbindung steht, und einen Stempel (11) umfasst, der dazu befähigt ist, sich entlang der Seitenfläche der Form zu bewegen, **dadurch gekennzeichnet, dass** der bewegliche Abschnitt darüber hinaus einen Einspritzkopf (20) umfasst, wobei der Einspritzkopf mit einer Wand (21) versehen ist, die eine Einspritzsäule (22) begrenzt, welche über eine Öffnung (26) mit dem Hohlraum in Verbindung steht; und
dadurch, dass der bewegliche Abschnitt (10) darüber hinaus einen Flansch (40) umfasst, der dazu befähigt ist, sich entlang der Seitenfläche des Stempels (11) zu bewegen, zwischen mindestens einer ersten Position, welche als offen bezeichnet wird und in welcher die Innenfläche des Flansches (40) mit der Seitenfläche des Stempels den Rückzugsraum (42) begrenzt, der über eine Öffnung (44) mit dem Hohlraum (7) in Verbindung steht, und mindestens einer zweiten Position, welche als geschlossen bezeichnet wird und in welcher der Flansch die Öffnung (44) verschließt, wobei der Rückzugsraum eine umlaufende Nut (43) umfasst, welche sich in dem Stempel befindet; und
dadurch, dass der Vakuumabsaugkanal (13) aus einem Kanal besteht, der sich in dem Stempel befindet und in die Kammer (42), welche aus dem Rückzugsraum besteht, oder in die umlaufende Nut (43) des Rückzugsraums einmündet; und
dadurch, dass der Einspritzkopf (20) im Inneren des Flansches (40) enthalten ist.

2. Formgebungsvorrichtung nach Anspruch 1, **dadurch gekennzeichnet, dass** sie darüber hinaus einen Kolben (30) umfasst, der einen unteren Abschnitt (32), welcher mit einer untenliegenden Fläche versehen ist, einen oberen Abschnitt (33) und eine Aussparung (31) umfasst, wobei der Kolben dazu befähigt ist, sich entlang der Einspritzsäule (22) zu bewegen, zwischen mindestens einer ersten Position, welche als offene Position bezeichnet wird und in welcher seine untenliegende Fläche, mit der Wand des Einspritzkopfes und der Öffnung, einen unteren Abschnitt der Einspritzsäule begrenzt, und mindestens einer zweiten Position, in welcher der Kolben die Öffnung der Einspritzsäule verschließt.

3. Formgebungsvorrichtung nach den Ansprüchen 1 bis 2, **dadurch gekennzeichnet, dass** die Formgebungsvorrichtung (1) darüber hinaus ein System zum Inbewegungsetzen (60) des beweglichen Abschnitts (10) umfasst, mittels dessen ein konstanter Druck auf den beweglichen Abschnitt ausgeübt werden kann.

4. Formgebungsvorrichtung nach Anspruch 3, **dadurch gekennzeichnet, dass** das System (60) ein translatorisches Winkeltriebsystem umfasst, welches einen Stellzylinder (61) aufweist, der eine Kraft auf einen translatorischen Winkeltrieb (62) ausübt, wobei der Winkeltrieb derart angeordnet ist, dass er gegenüber der Längsachse des Stellzylinders (61) einen Winkelversatz α aufweist.

5. Formgebungsvorrichtung nach den Ansprüchen 1 bis 2, **dadurch gekennzeichnet, dass** der Einspritzkopf (20) darüber hinaus, in seiner Wand, mindestens einen ersten unteren Kanal (23.1) zum Einspritzen des Harzes und mindestens einen ersten oberen Kanal (23.2) zum Abführen des Harzes aus dem Einspritzkopf umfasst, wobei der erste untere und erste obere Kanal senkrecht übereinander angeordnet sind und, zusammen mit der Ausnehmung des Kolbens und der Wand des Einspritzkopfes, mindestens ein Kreislaufsystem zum Rückführen des Harzes bilden.

6. Formgebungsvorrichtung nach Anspruch 5, **dadurch gekennzeichnet, dass** der Einspritzkopf (20) darüber hinaus, in seiner Wand, mindestens einen zweiten unteren Kanal (24.1) zum Einspritzen des Harzes und mindestens einen zweiten oberen Kanal (24.2) zum Abführen des Harzes aus dem Einspritzkopf umfasst, wobei der zweite untere und zweite obere Kanal senkrecht übereinander angeordnet sind und, zusammen mit der Ausnehmung des Kolbens und der Wand des Einspritzkopfes, mindestens ein Kreislaufsystem zum Rückführen des Harzes bilden.

7. Formgebungsvorrichtung nach den Ansprüchen 1 bis 2, **dadurch gekennzeichnet, dass** der Einspritzkopf (20), in seiner Wand, n untere Kanäle zum Einspritzen des Harzes und m obere Kanäle zum Abführen des Harzes aus der Einspritzsäule umfasst, wobei n größer oder gleich 2 ist, wobei m größer oder gleich 2 ist, wobei n gleich m ist oder sich davon unterscheidet, sodass n Kreislaufsysteme zum Rückführen des Harzes gebildet werden, wenn n kleiner als m ist, oder m Kreislaufsysteme zum Rückführen gebildet werden, wenn m kleiner als n ist.

8. Formgebungsvorrichtung nach Anspruch 2, **dadurch gekennzeichnet, dass** der obere Abschnitt der Einspritzsäule aus einem Raum (27) besteht, der dazu bestimmt ist, unter Druck gesetzt zu werden, und der dazu befähigt ist, den oberen Abschnitt (33) des Kolbens (30) aufzunehmen, wobei der Kolben hydraulisch ist, um eine Bewegung des Kolbens entlang der Einspritzsäule (22) zu ermöglichen.

9. Verfahren zur Herstellung von strukturierten oder halbstrukturierten Teilen aus Verbundwerkstoff, welcher ein Polymerharz und ein Fasersubstrat umfasst, **dadurch gekennzeichnet, dass** es mit Hilfe einer Einspritzvorrichtung nach einem beliebigen der Ansprüche 1 bis 8 durchgeführt wird, und wobei es die folgenden Schritte umfasst:
- a) Anordnen des Fasersubstrats in dem Hohlraum,
- b) Leerpumpen des Hohlraums über den Vakuumabsaugkanal, welcher sich in dem beweglichen Abschnitt der Formgebungsvorrichtung befindet,
- c) Durchtränken des Fasersubstrats durch Einspritzen einer vorbestimmten Menge an Polymerharz in den Hohlraum, durch den Kanal zum Einspritzen des Harzes, dann Komprimieren des Harzes von dem beweglichen Abschnitt der Formgebungsvorrichtung.

10. Verfahren zur Herstellung nach Anspruch 9, **dadurch gekennzeichnet, dass** es darüber hinaus einen Schritt des Rückführens des Harzes umfasst, welches nicht in den Hohlraum eingespritzt wurde, wobei der Rückführungsschritt vor, während oder nach dem Schritt des Komprimierens des Harzes durchgeführt werden kann.

11. Herstellungsverfahren nach Anspruch 9, **dadurch gekennzeichnet, dass** es darüber hinaus, vor dem Schritt des Einspritzens des Harzes, einen Schritt des Schließens der Kammer umfasst.

12. Herstellungsverfahren nach Anspruch 11, **dadurch gekennzeichnet, dass** der Schritt des Schließens der Kammer darin besteht, dass die Öffnung des Rückzugsraums von der untenliegenden Fläche des Flansches verschlossen wird, indem der Flansch in die geschlossene Position bewegt wird.

13. Herstellungsverfahren nach einem der Ansprüche 10 bis 12, **dadurch gekennzeichnet, dass** es das Einspritzen des Polymerharzes im Mehrkomponentenbetrieb, und insbesondere das Einspritzen im Zweikomponentenbetrieb, ermöglicht.

## Claims

1. Moulding device (1) for manufacturing structured or semistructured composite components comprising a polymer resin (50) and a fibrous substrate (51), comprising:
- a mould (2) comprising a lower part (3) with a bottom and a lateral wall and an upper part (4) that is able to come into contact with said lower part in order to close the mould,
- a movable part (10) that is able to move along the lateral surface of the mould, comprising a compression surface (14) that forms a cavity (7) with the bottom and the lateral surface (5) of said mould (2),
the movable part (10) comprising a vacuum-drawing channel (13) that opens into a chamber consisting of a shrinkage space (42) that is located above the cavity and communicates with said cavity (7), and a punch (11) that is able to move along the lateral surface of the mould, **characterized in that** the movable part further comprises an injection head (20), said injection head being provided with a wall (21) defining an injection column (22) that communicates with the cavity by way of an opening (26); and
**in that** the movable part (10) further comprises a collar (40) that is able to move along the lateral surface of the punch (11), between at least one first position, called the open position, in which the lower surface of the collar (40) defines, with the lateral surface of the punch, the shrinkage space (42) that communicates with the cavity (7) by way of an opening (44), and at least one second position, called the closed position, in which the collar blocks said opening (44), the shrinkage space (42) comprising a peripheral groove (43) located in the punch; and
**in that** the vacuum-drawing channel (13) consists of a channel that is located in the punch and opens into the chamber (42) consisting of the shrinkage space, or into the peripheral groove (43) of said shrinkage space; and
**in that** the injection head (20) is comprised within the collar (40).

2. Moulding device according to Claim 1, **characterized in that** it further comprises a piston (30) comprising a lower part (32) provided with a lower surface, an upper part (33), and a recess (31), said piston being able to move along the injection column (22) between at least one first position called the open position, in which its lower surface defines, with the wall of the injection head and the opening, a lower portion of the injection column, and at least one second position in which the piston blocks the opening in the injection column.

3. Moulding device according to Claims 1 and 2, **characterized in that** the moulding device (1) further comprises a system (60) for setting the movable part (10) in motion that makes it possible to apply a constant pressure to said movable part.

4. Moulding device according to Claim 3, **characterized in that** the system (60) comprises a translational angle transmission system, comprising a cylinder (61) that applies a load to a translational angle transmission (62), said angle transmission being positioned so as to be offset by an angle α relative to the longitudinal axis of the cylinder (61).

5. Moulding device according to Claims 1 and 2, **characterized in that** the injection head (20) further comprises, in its wall, at least one first lower channel (23.1) for injecting the resin and at least one first upper channel (23.2) for evacuating the resin from said injection head, said first lower and upper channels being positioned vertically in line with one another and forming, with the recess of the piston and the wall of the injection head, at least one resin recirculating circuit.

6. Moulding device according to Claim 5, **characterized in that** the injection head (20) further comprises, in its wall, at least one second lower channel (24.1) for injecting the resin and at least one second upper channel (24.2) for evacuating the resin from said injection head, said second lower and upper channels being positioned vertically in line with one another and forming, with the recess of the piston and the wall of the injection head, at least one resin recirculating circuit.

7. Moulding device according to Claims 1 and 2, **characterized in that** the injection head (20) comprises, in its wall, n lower channels for injecting the resin and m upper channels for evacuating the resin from the injection column, n being greater than or equal to 2, m being greater than or equal to 2, n being equal to or different from m, so as to form n resin recirculating circuits if n is less than m, or m recirculating circuits when m is less than n.

8. Moulding device according to Claim 2, **characterized in that** the upper part of the injection column consists of a space (27) that is intended to be pressurized and is able to receive the upper part (33) of the piston (30), said piston being hydraulic, in order to allow said piston to move along the injection column (22).

9. Method for manufacturing structured or semistructured composite components comprising a polymer resin and a fibrous substrate, **characterized in that** it is carried out with the aid of an injecting device according to any one of Claims 1 to 8 and comprises the following steps:
- a) positioning the fibrous substrate in the cavity,
- b) drawing a vacuum in the cavity via the vacuum-drawing channel located in the movable part of the moulding device,
- c) impregnating the fibrous substrate by injecting a predetermined amount of polymer resin into the cavity via the resin injecting channel, then compressing said resin with the movable part of the moulding device.

10. Manufacturing method according to Claim 9, **characterized in that** it further comprises a step of recirculating the resin that has not been injected into the cavity, said recirculation step being able to be carried out before, during, or after the resin compression step.

11. Manufacturing method according to Claim 9, **characterized in that** it further comprises, prior to the resin injection step, a step of closing the chamber.

12. Manufacturing method according to Claim 11, **characterized in that** the step of closing the chamber consists of blocking the opening in the shrinkage space with the lower surface of the collar, by moving said collar into the closed position.

13. Manufacturing method according to any one of Claims 10 to 12, **characterized in that** it allows multicomponent injection of the polymer resin and in particular two-component injection.
